# EUROPEAN PATENT APPLICATION

(11) **EP 1 529 591 A1**
(43) Date of publication of application: **11.05.2005**
(21) Application number: 04105463.6
(22) Date of filing: 03.11.2004
(51) Int. Cl.: B23K 11/14, B23K 33/00, B23K 11/02

(54) **Method of joining parts by welding**

(30) Priority: 04.11.2003 IT TO20030875
(71) Applicant: AVIO S.p.A., 10135 TORINO (IT)
(72) Inventor: PODESTA', Emanuele, 72100, BRINDISI (IT)
(74) Representative: Jorio, Paolo, Dr. Ing.

(57) **Abstract**

A method of joining parts by welding, whereby a first (2) and at least a second (3) part to be joined are first positioned with respective weld faces (6) (7) facing each other, and are then heated and forced against each other; prior to positioning the weld faces (6) (7) facing each other, the weld faces (6) (7) are worked to form a number of projections (8) extending towards the other weld face and defining, with corresponding portions of the other weld face, respective weld starts and consequent localized microfusions which gradually spread to produce a single weld pool.

## Description

The present invention relates to a method of joining parts by welding.

More specifically, the present invention relates to a method of joining parts by welding without filler material. As is known, welds without filler material are made by placing respective flat surfaces of the parts for welding in contact with one another; and current is applied between the parts to heat the contact region and so form a weld.

Though widely used, the above welding method has several drawbacks and limitations. In particular, there are limitations to the size of the weld, which must be as small as possible to keep the heat required within acceptable limits, and to obtain a homogeneous weld. Moreover, the heat applied to melt the material seriously alters the structure of wide areas surrounding the weld, thus resulting in a weldment of uneven structure and mechanical strength.

Moreover, the weld areas, and often also the areas surrounding the weld, undergo permanent deformation, thus resulting in a weldment of poor or even unacceptable appearance.

It is an object of the present invention to provide a method of joining parts by welding, designed to provide a straightforward, low-cost solution to the above problems.

According to the present invention, there is provided a method of joining parts by welding, the method comprising the steps of positioning a first and at least a second part to be joined with respective weld faces facing each other; heating said weld faces; and forcing said parts against each other; characterized by comprising the further steps of forming at least a first of said weld faces in such a manner as to form a number of projections extending towards the other weld face and defining, with corresponding portions of the other weld face, a number of weld starts.

In the method described above, the heating and forcing steps are preferably performed so that said weld starts produce a single weld pool between said weld faces.

Said weld faces are also preferably shaped to define, for each of said projections, a respective chamber bounded partly by said projection when positioned contacting the other weld face; said chamber housing at least part of the fusion products produced by said heating step and said forcing step.

Each of said weld faces is conveniently shaped to comprise respective projections alternating with projections on the other weld face.

A non-limiting embodiment of the invention will be described by way of example with reference to the accompanying drawings, in which:
Figure 1 shows a side view of a weldment produced using the welding method according to the teachings of the present invention;
Figure 2 shows parts of the Figure 1 weldment as prepared in accordance with one of the steps in the method according to the present invention;
Figures 3 and 4 show, respectively, a view in perspective and a side view of the Figure 2 parts as arranged in accordance with a further step in the method according to the invention;
Figure 5 shows a variation of one of the Figure 2 parts;
Figure 6 shows a variation of an intermediate portion of the Figure 1 weldment.

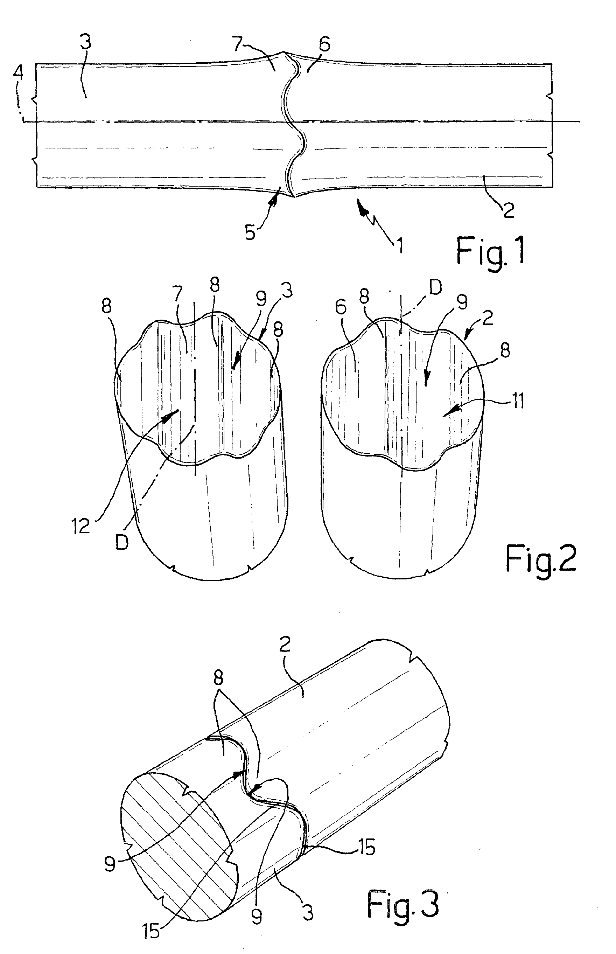

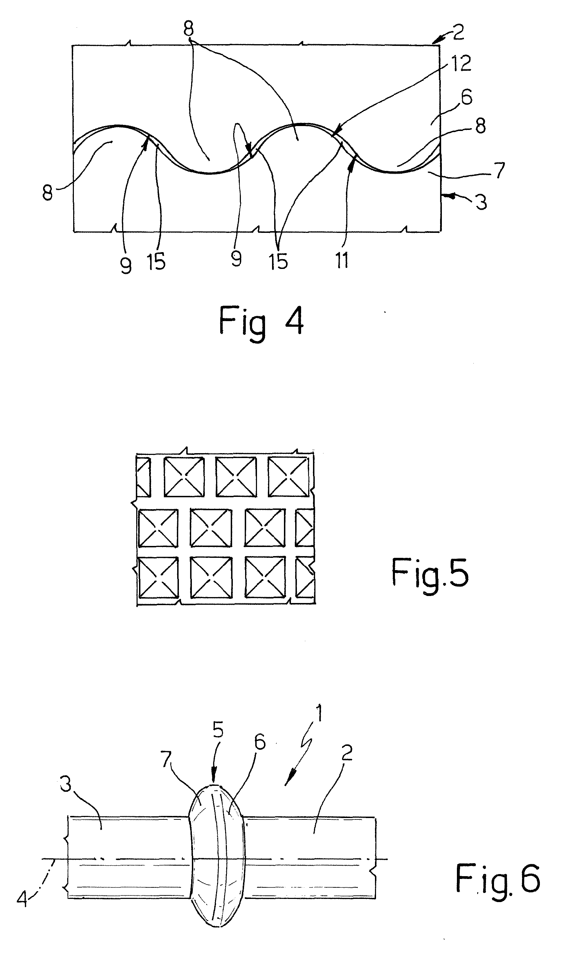

Number 1 in Figures 1 and 6 indicates a weldment produced by welding parts without filler material. Weldment 1 comprises two - in the example shown, cylindrical - parts 2 and 3 aligned coaxially with a common axis 4 and joined end to end by a weld 5.

Weldment 1 is formed by preparing the two parts 2 and 3 - more specifically, by working the respective end faces or ends 6 and 7 of parts 2 and 3 - to form, on each end face 6, 7, a number of axial projections 8, and a number of recesses 9 which are engaged by respective projections 8 as shown in Figures 3 and 4. In the specific embodiment described, both end faces 6, 7 are worked so as to be bounded axially by respective undulated, mating surfaces 11 and 12. Projections 8 of each end face 6, 7 project axially, extend parallel to a diametrical direction indicated D in Figure 2, and have respective rounded vertices. In variations not shown, the vertices are flat or sharp-edged. In the example described, each projection 8, measured perpendicular to diametrical direction D, is of constant size and smaller than the respective recess 9 measured in the same direction. Once end faces 6, 7 are formed, parts 2 and 3 are positioned with end faces 6 and 7 facing each other, and are moved towards each other to insert each projection 8 inside a respective recess 9, as shown in Figures 3 and 4. Once inserted, projections 8 of end face 6 alternate with projections 8 of end face 7, and each projection 8 rests on the bottom of respective recess 9 along a straight line. Each projection 8 defines, with an adjacent projection 8, a respective chamber 15 also elongated in a diametrical direction. Once positioned, the two parts 2 and 3 are forced against each other and, at the same time, are supplied with electric current varying in intensity according to the cross section and the material for welding. By way of example, titanium alloy parts of about 115 square millimetres in cross section are welded by supplying energy pulses of about 25-25 KJ, exerting force of about 32 KN, and with current peaks of 30-35 KA.

As a result of the force exerted and the current flow, each projection 8 generates a respective continuous weld start in a straight direction, and passes gradually from a solid to a melted or coalescent state, generating gaseous products and a respective quantity of melt liquid. The melt liquid is housed partly inside relative chamber 15, and mixes with the melt liquids of the other projections 8 to form a single weld pool which, when set, joins the two parts 2, 3 firmly by a seamless weld as shown in Figure 1.

The welding method described therefore provides for obtaining homogeneous welds, and hence a superior finished product, regardless of the dimensions of the weld faces and using no filler material. Unlike known solutions, in fact, in which current flow generates a single extensive weld, the present invention, because of projections 8, generates a number of "microwelds", and a corresponding number of spaced, localized microfusions which gradually spread over increasing areas and increasing amounts of material to eventually combine with the adjacent microfusions and form, between the weld faces, a single homogeneous pool covering the entire weld area.

Melting the whole of the weld faces, starting with localized, gradually expanding microfusions, provides for greatly reducing the heat-affected area surrounding the weld, and for perfect dimensional control of the areas affected by the weld. As such, when welding circular parts in particular, it is possible, by appropriately varying the thrust applied to join the parts, and the amount of heat applied, to obtain welds of practically the same diameter as parts 2, 3, or much larger in diameter than the parts but extremely compact axially, as shown in Figure 6.

Clearly, changes may be made to the method as described herein without, however, departing from the protective scope as defined in the accompanying Claims. In particular, end faces 6 and 7 may be worked completely differently from those described by way of example, though still in such a manner as to form a number of spaced portions defining respective localized weld starts. In the Figure 5 embodiment, for example, projections 8 are pyramid-shaped, which produces a large number of spot starts and, hence, a large number of localized microfusions. Moreover, projections may be formed on only one of the parts or end faces to be joined, the other part being simply flat or curved.

Finally, the projections may be sized - in particular, axially, in the example described - in such a manner as to produce successive weld starts and microfusions in a predetermined time sequence.

Moreover, the method described obviously applies to any parts to be joined, regardless of the material, geometry, and/or size involved.

## Claims

1. A method of joining parts by welding, the method comprising the steps of positioning a first (2) and at least a second (3) part to be joined with respective weld faces (6) (7) facing each other; heating said weld faces; and forcing said parts (2) (3) against each other; **characterized by** comprising the further steps of forming at least a first (6) (7) of said weld faces (6) (7) in such a manner as to form a number of projections (8) extending towards the other weld face and defining, with corresponding portions of the other weld face, a number of weld starts.

2. A method as claimed in Claim 1, **characterized in that** said heating and forcing steps are performed so that said weld starts produce a single weld pool between said weld faces.

3. A method as claimed in Claim 2, **characterized in that** said weld faces (6) (7) are shaped to define, for each of said projections (8), a respective chamber (15) bounded partly by said projection (8) when positioned contacting the other weld face; said chamber (15) housing at least part of the fusion products produced by said heating step and said forcing step.

4. A method as claimed in Claim 3, **characterized in that** each of said weld faces (6) (7) is shaped to comprise respective projections (8) alternating with projections on the other weld face.

5. A method as claimed in Claim 4, **characterized in that**, prior to said forcing step, said two parts to be joined are positioned with respect to each other so that at least some of said chambers (15) are defined by adjacent projections (8).

6. A method as claimed in any one of the foregoing Claims, **characterized in that** said weld faces are so formed that at least one of said weld starts is a continuous start in a substantially straight direction.

7. A method as claimed in Claim 6, **characterized in that** both said weld faces are so formed as to be undulated in shape.

8. A method as claimed in any one of Claims 1 to 5, **characterized in that** said weld faces are so formed as to produce a number of substantially spot starts.
